# EUROPÄISCHE PATENTANMELDUNG

(11) **EP 1 862 339 A1**
(43) Veröffentlichungstag der Anmeldung: **05.12.2007**
(21) Anmeldenummer: 07106190.7
(22) Anmeldetag: 13.04.2007
(51) Int. Cl.: B60J 1/20

(54) **Heckfensterrollo**

(30) Priorität: 13.04.2006 DE 102006017883
(71) Anmelder: Wagon Automotive FKT GmbH, 85104 Pförring (DE)
(72) Erfinder: Feigl, Claus-Michael, 85055, INGOLSTADT (DE)
(74) Vertreter: Bioret, Ludovic

(57) **Zusammenfassung**

Ein Fensterrollo (1) für Kraftfahrzeuge weist eine Rollobahn (2), die mit ihrem ersten Ende mit einer drehbar gelagerten Wickelwelle (3) und mit ihrem zweiten Ende mit einem Auszugsprofil (5) verbunden ist, eine Antriebseinrichtung (9) zum Aufwickeln und/oder Abwickeln der Rollobahn (2) auf die Wickelwelle (3) sowie zwei seitlich an dem Fenster angeordnete Führungsschienen (6) auf, in denen die Enden des Auszugsprofils (5) verschiebbar geführt sind. Die Führungsschienen (6) sind in einer Nut (14) eines Innenverkleidungsteiles (8) des Kraftfahrzeuges angeordnet, wobei jede Führungsschiene (6) eine Sichtseite (13) mit einer geschlossenen Oberfläche (13) aufweist und in einem seitlichen, der Sichtseite abgewandten Bereich jeweils zwei einander gegenüberliegende Ausnehmungen (15) zur Führung des Auszugsprofils (5) und/ oder von Teilen der Antriebseinrichtung (9). Eine Führungsschiene (6) für ein Fensterrollo (1) eines Kraftfahrzeuges zur Führung der Enden eines Auszugsprofils (5) des Fensterrollos (1) weist eine Sichtseite (13) mit einer geschlossenen Oberfläche auf und in einem seitlichen, der Sichtseite (13) abgewandten Bereich zwei einander gegenüberliegende Ausnehmungen (15) zur Führung des Auszugsprofils (5) und/ oder von Teilen der Antriebseinrichtung (9).

## Beschreibung

Die vorliegende Erfindung betrifft ein Fensterrollo, insbesondere ein Heckfensterrollo, für Kraftfahrzeuge mit einer Rollobahn, die mit ihrem ersten Ende mit einer drehbar gelagerten Wickelwelle und mit ihrem zweiten Ende mit einem Auszugsprofil verbunden ist. Das Fensterrollo weist eine Antriebseinrichtung zum Aufwickeln und/oder Abwickeln der Rollobahn auf die Wickelwelle sowie zwei seitlich an dem Fenster angeordnete Führungsschienen auf, in denen die Enden des Auszugsprofils verschiebbar geführt sind.

Derartige Fensterrollos sind aus dem Stand der Technik in vielfachen Ausführungen bekannt. Die DE 100 62 690 A1 zeigt eine Ausführung eines Heckscheibenrollos, bei welchem bei welchem das Auszugsprofil in zwei seitlich an der Heckscheibe angeordneten Führungsschienen geführt ist. Die Führungsschienen sind hier unmittelbar an der Rohkarosserie befestigt, wobei sie entweder direkt an dem Flansch zur Aufnahme der Fensterscheibe befestigt werden oder aber gemäß einer anderen Ausführung direkt an dem Flansch angeformt sind.

Die DE 100 57 759 A1 zeigt ein Heckscheibenrollo, bei welchen die Führungsschienen derart auf das Heckfenster aufgeklebt sind, dass sich die Führungsschlitze beider Schienen einander gegenüberliegen. Bei stärker gekrümmten Heckscheiben muss die Wickelwelle jedoch in einem gewissen Abstand von der Heckscheibe angeordnet werden. Die Führungsschienen laufen daher in ihrem unteren Bereich in einem Radius aus, welcher ein sauberes Einlaufen der Rollobahn in die Führungsschiene ermöglicht. Im Bereich dieses Radius können die Führungsschienen nicht mit der Heckscheibe verklebt werden, sondern müssen an der Innenverkleidung angeordnet werden.

Aufgrund des radiusförmigen Auslaufens der Führungsschienen im unteren Bereich des Fensters bzw. der Bombzierung der Heckscheibe bestehen Schwierigkeiten, die Führungsschienen derart mit den Innenverkleidungsteilen zu kombinieren, dass sich ein ansprechendes optisches Erscheinungsbild ergibt.

Die DE 103 51 040 B3 zeigt eine Führungsschienenanordnung, bei welcher die Führungsschienen eine hinterschnittene Nut zur Führung des Auszugsprofils sowie von Antriebsgliedern eines elektrischen Antriebs aufweist. Gemäß dieser Ausführung sind die Führungsschienen Bestandteil der Seitenverkleidungen der C-Säule der Karosserie. Die Innenverkleidung ist zweiteilig mit einem ersten und einem zweiten Innenverkleidungsteil ausgebildet, wobei die Schiene an der Rückseite der beiden Innenverkleidungsteile angebracht ist und sich längs des Spaltes zwischen den beiden Verkleidungsteilen den Spalt überbrückend erstreckt. Die Führungsschiene bzw. die Innenverkleidungsteile bilden hierdurch in montiertem Zustand eine hinterschnittene Nut zur Führung des Auszugsprofils bzw. der flexiblen Antriebsglieder.

Die DE 103 62 017 A1 beschreibt ebenfalls eine Führungsschienenanordnung für Rollos in Kraftfahrzeugen, bei welcher die Führungsschiene durch zwei als Formteil hergestellte und im wesentlichen hinterschneidungsfreie Bauteile gebildet wird. Die Bauteile können hierdurch auf einfache Weise ohne Kerne aus Kunststoff gespritzt werden und bilden erst nach Zusammenfügen der beiden Teile eine hinterschnittene Führungsnut. Zumindest ein Teil einer Führungsschiene kann hierbei auch einstückig mit einem Teil der Innenverkleidung ausgebildet sein.

Durch die beschriebenen Anordnungen der Führungsschienen ist es möglich, die Schienen durch die Fensterscheibe und/oder Teile der Innenverkleidung weitgehend zu verdecken. Es werden jedoch von der Serienausstattung abweichende bzw. mehrteilige Innenverkleidungsteile geschaffen, welche das Handling in der Fertigung erschweren.

Aufgabe der vorliegenden Erfindung ist es, ein Fensterrollo für ein Kraftfahrzeug sowie entsprechende Führungsschienen zu schaffen, welche vielseitig in allen Fahrzeugvarianten einsetzbar sind und dennoch auf einfache Weise herzustellen und mit der Innenverkleidung des Kraftfahrzeuges zu verbinden sind.

Die Aufgabe wird gelöst mit den Merkmalen der unabhängigen Ansprüche.

Ein Fensterrollo für Kraftfahrzeuge mit einer Rollobahn, die mit ihrem ersten Ende mit einer drehbar gelagerten Wickelwelle und mit ihrem zweiten Ende mit einem Auszugsprofil verbunden ist, und mit einer Antriebseinrichtung zum Aufwickeln und/oder Abwickeln der Rollobahn auf die Wickelwelle weist zwei seitlich an dem Fenster angeordnete Führungsschienen auf, in denen die Enden des Auszugsprofils verschiebbar geführt sind. Erfindungsgemäß weist jede Führungsschiene eine Sichtseite mit einer geschlossenen Oberfläche auf, wobei in einem seitlichen, der Sichtseite abgewandten Bereich jeweils zwei einander gegenüberliegende Ausnehmungen zur Führung des Auszugsprofils und/oder von Teilen der Antriebseinrichtung angeordnet sind. Die Führungsschienen sind hierbei in einer entsprechenden Nut oder Ausnehmung eines Innenverkleidungsteiles des Fahrzeuges anordenbar. Durch die Anordnung der Ausnehmungen in einem der Sichtseite abgewandten Bereich kann die Schiene durch ein Gleitelement des Auszugsprofils außen umgriffen werden, so dass einerseits das Auszugsprofil in den Führungsschienen sicher geführt ist und andererseits durch die geschlossene Oberfläche der Führungsschiene zur Sichtseite ein optisch ansprechendes Erscheinungsbild erreicht wird. Die Führungsschienen sind hierbei in einer Nut oder Ausnehmung eines Innenverkleidungsteiles anordenbar, so dass eine zwei- oder mehrteilige Ausführung des Innenverkleidungsteiles zur Anordnung der Führungsschienen nicht erforderlich ist.

Die Führungsschiene ist auf einfache Weise herzustellen, weil sie keine hinterschnittene Führungsnut zur Führung des Auszugsprofils oder von Teilen der Antriebseinrichtung aufweisen muss. Durch die Anordnung der Führungsschiene in einer Ausnehmung des Innenverkleidungsteiles sowie die geschlossene Oberfläche der Führungsschiene kann die Führungsschiene optisch ansprechend in den Fahrzeuginnenraum integriert werden. Die erfindungsgemäße Führungsschiene kann daher auch in Fahrzeugen ohne Fensterrollo verbaut werden und dient hierbei der Verblendung der serienmäßig in dem Innenausstattungsteil vorhandenen Nut bzw. Ausnehmung. Die Führungsschiene kann auf einfache Weise als Designelement oder Beleuchtungselement ausgebildet werden. Hierdurch kann ein für alle Fahrzeugvarianten mit und ohne Fensterrollo einheitliches Innenverkleidungsteil geschaffen werden, so dass Lagerung, Handling und Montage der Innenverkleidungsteile wesentlich erleichtert sind.

Gemäß einer vorteilhaften Ausführung der Erfindung sind die Ausnehmungen der Führungsschienen als Nuten ausgebildet. Hierdurch kann die Führungsschiene als kompaktes Bauteil ausgebildet werden, welches auf einfache Weise in einer Ausnehmung des Innenverkleidungsteiles befestigt werden kann. Ebenso können jedoch die Ausnehmungen auch durch einen einfachen Absatz ausgebildet sein, so dass die Führungsschiene einen im wesentlichen T-förmigen Querschnitt aufweist. Besonders vorteilhaft ist es, wenn die Ausnehmungen der Führungsschiene als hinterschneidungsfreie Nuten ausgebildet sind.

Weiterhin ist es vorteilhaft, wenn die Führungsschienen als Kunststoffspritzgussteile ausgeführt sind. Diese können in einer einfacher Weise hergestellt werden, da keine Kerne zur Herstellung einer hinterschnittenen Nut erforderlich sind. Durch das die Schiene von außen umgreifende Gleitelement ist dennoch eine sichere Führung des Auszugsprofils an den Schienen gewährleistet.

Besonders vorteilhaft ist es, wenn in montiertem Zustand eine Ausnehmung der Führungsschiene mit der Nut bzw. Ausnehmung des Innenverkleidungsteiles eine hinterschnittene Führungsnut ausbildet. Dies ist insbesondere vorteilhaft, wenn das Fensterrollo mit einem elektrischen Antrieb versehen ist, so dass flexible Antriebsglieder in der hinterschnittenen Nut ausknicksicher geführt werden können.

Weiterhin ist es vorteilhaft, wenn in montiertem Zustand die Führungsschiene flächenbündig mit dem Innenverkleidungsteil angeordnet ist. Da zum Fahrzeuginnenraum hin keine Führungsnuten sichtbar sind, kann die Schiene optisch besonders ansprechend in die Innenverkleidung integriert werden.

Vorzugsweise umfasst die Antriebseinrichtung einen elektrischen Antrieb, welcher über verschieblich geführte, flexible Antriebsglieder mit dem Auszugsprofil verbunden ist. Das Fensterrollo kann hierbei besonders komfortabel betätigt werden. Ebenso kann jedoch als Antriebseinrichtung nur ein Federmotor angeordnet sein, so dass das Fensterrollo von Hand ausziehbar ist und durch die Federkraft wieder auf die Wickelwelle aufgewickelt werden kann. Bei einer elektrischen Antriebseinrichtung sind die flexiblen Antriebsglieder vorzugsweise in einer hinterschnittenen Nut geführt. Die hinterschnittene Nut kann hierbei direkt in der Führungsschiene angeordnet sein oder aber durch eine Ausnehmung der Führungsschiene in Verbindung mit einer oder mehreren Wänden der Nut des Innenverkleidungsteiles gebildet sein.

Gemäß einer vorteilhaften Weiterbildung der Erfindung weist das Auszugsprofil einen einer Querwölbung des Fensters angepassten bogenförmigen Verlauf auf. Das Auszugsprofil ist daher auch in ausgezogenem Zustand platzsparend an dem Fenster anordenbar. Ist das Rollo vor einem Heckfenster angeordnet, kann es weiterhin durch das bogenförmige Auszugsprofil so ausgezogen werden, dass es die Sicht nach hinten kaum beeinträchtigt. Insbesondere in Verbindung mit einem ebenfalls bogenförmigen Auszugsschlitz ist die ausgezogene Rollobahn der Wölbung des Fensters gut angepasst.

Gemäß einer anderen vorteilhaften Weiterbildung der Erfindung ist das Auszugsprofil über Gleitelemente in den Führungsschienen geführt. Sind die Gleitelemente als separate Bauteile ausgebildet, können diese besonders einfach auf die Führungsschiene abgestimmt werden.

Gemäß einer besonders vorteilhaften Weiterbildung der Erfindung ist das Auszugsprofil mit den Gleitelementen durch ein Gelenk verbunden. Hierdurch kann ein klemmfreies Betätigen des Fensterrollos und somit ein optimaler Bedienkomfort auch beim Durchfahren gekrümmter Führungsschienen erreicht werden. Insbesondere an trapezförmigen Heckfenstern, an welchen die Führungsschienen in einem Radius hin zur Wickelwelle auslaufen, kann hierbei ein Verklemmen der Gleitelemente in der Schiene vermieden werden.

Gemäß einer vorteilhaften Ausführung der Erfindung ist das Gelenk hierbei als Kugelgelenk ausgebildet. Ebenso kann das Gelenk jedoch auch als Scharnier ausgeführt sein, welches eine Drehung der Gleitelemente in Bezug auf das Auszugsprofil ermöglicht. Parallelitäts- und Winkelabweichungen der Führungsschienen können hierdurch ausgeglichen werden. Vorzugsweise ist das Gelenk hierbei derart ausgeführt, dass eine Drehung des Auszugsprofils um seine Längsachse verhindert wird, da dies bei gebogenen Auszugsprofilen zu einem Verlust der Netzspannung der Rollobahn führen würde.

Insbesondere bei Anordnung eines erfindungsgemäßen Fensterrollos vor einem Heckfenster ist es vorteilhaft, wenn das Auszugsprofil eine Einrichtung zum Breitenausgleich aufweist. Durch diese kann eine Trapezform üblicher Heckfenster ausgeglichen werden. Die Einrichtung zum Breitenausgleich kann beispielsweise durch ein teleskopartig im Inneren des Auszugsprofils gelagertes Element, welches mit dem Gleitelement verbunden ist, gebildet sein.

Um die Führungsschienen, welche erfindungsgemäß im Sichtbereich der Innenverkleidung angeordnet sind, besonders ansprechend in den Fahrzeug-innenraum integrieren zu können, ist es vorteilhaft, wenn die Führungsschienen mit einer dekorativen Oberfläche versehen sind. Diese kann beispielsweise durch eine Beschichtung, insbesondere Lackierung, gebildet sein.

Gemäß einer anderen Ausführung der Erfindung ist die Führungsschiene mit einer Einrichtung zur Beleuchtung versehen. Ist die erfindungsgemäße Führungsschiene in einem Fahrzeug ohne ein Fensterrollo angeordnet, tritt diese dennoch nicht optisch beeinträchtigend in Erscheinung. Die Beleuchtung kann hierbei der Innenraumbeleuchtung des Fahrzeuges dienen oder lediglich optische Effekte hervorrufen.

Weiterhin kann es vorteilhaft sein, wenn die Führungsschiene aus einem transparenten Material ausgebildet ist. Hierdurch können in Verbindung mit einer Beleuchtung der Schiene besonders ansprechende optische Effekte erreicht werden.

Ebenso ist es vorteilhaft, wenn die Führungsschiene aus einem transparenten Material ausgebildet ist und nur teilweise mit einer Beschichtung, insbesondere Lackierung, versehen ist. Hierdurch können verschiedene Muster oder auch Schriftzüge auf der Führungsschiene realisiert werden. Die Führungsschiene ist hierdurch auch als Informations- oder Werbeträger einsetzbar. Ebenso kann eine entsprechend ausgeführte Führungsschiene mit einer Einrichtung zur Beleuchtung versehen sein.

Weitere Vorteile der Erfindung werden anhand der nachfolgend beschriebenen Ausführungsbeispiele dargestellt. Es zeigen:
- **Figur 1**: eine schematische Darstellung eines Fensterrollos mit einer elektrischen Antriebseinrichtung,
- **Figur 2**: eine Heckansicht eines Fahrzeuges mit einem erfindungsgemäßen Fensterrollo und einer erfindungsgemäßen Führungsschiene,
- **Figur 3**: eine schematische Schnittdarstellung der erfindungsgemäßen Führungsschiene, welche in einer Nut eines Innenverkleidungsteiles angeordnet ist, mit einem Gleitelement,
- **Figur 4**: eine weitere schematische Schnittdarstellung einer erfindungsgemäßen Schiene mit einem Innenverkleidungsteil, sowie
- **Figur 5**: eine Darstellung eines Gleitelementes mit einem Kugelgelenk zur Verbindung mit dem Auszugsprofil.

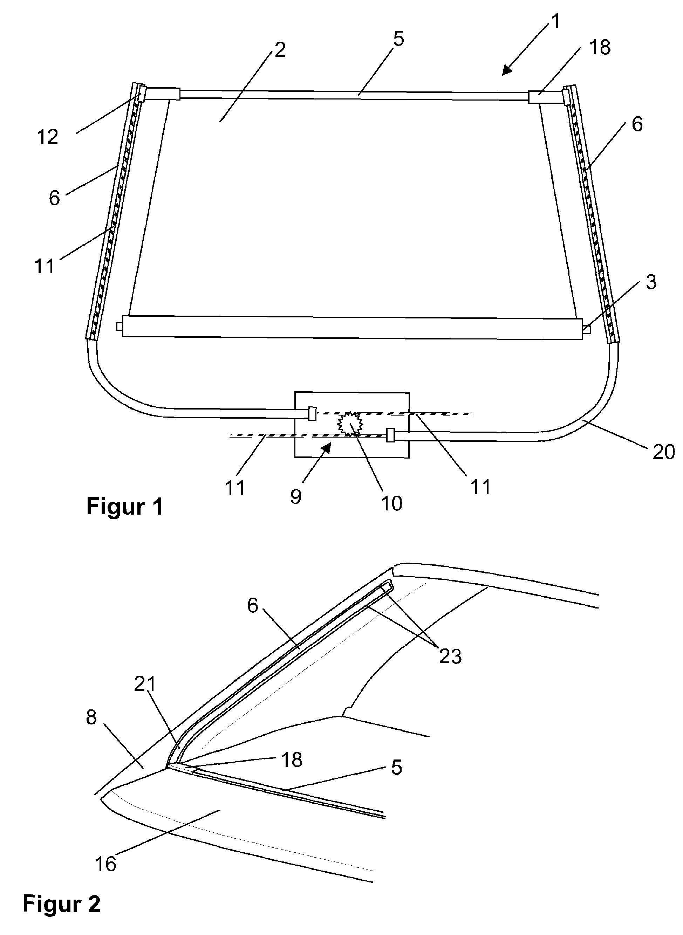

Figur 1 zeigt eine schematische Darstellung eines Fensterrollos 1, welches insbesondere zur Anordnung vor einem Heckfenster eines Kraftfahrzeuges vorgesehen ist. Im gezeigten Beispiel ist das Fensterrollo 1 mit einem elektrischen Antrieb versehen, die vorliegende Erfindung ist jedoch auch zum Einsatz in handbetätigten Fensterrollos 1 vorgesehen. Ebenso können das erfindungsgemäße Fensterrollo 1 bzw. die erfindungsgemäßen Führungsschienen 6 auch an einem Fahrzeugdach oder Seitenfenster angeordnet sein.

Das Fensterrollo 1 umfasst eine Rollobahn 2, welche mit ihrem ersten Ende mit einer drehbar gelagerten Wickelwelle 3 und an ihrem zweiten Ende mit einem Auszugsprofil 5 verbunden ist. Die Enden des Auszugsprofils 5 sind in seitlich an dem Fenster angeordneten Führungsschienen 6 verschiebbar geführt. Vorliegend ist das Fensterrollo 1 mit einer elektrischen Antriebseinrichtung 9 zum Aufwickeln und Abwickeln der Rollobahn 2 auf die Wickelwelle 3 versehen. Die Antriebseinrichtung 9 umfasst einen hier nicht dargestellten elektrischen Antrieb mit einem Zahnrad 10, welches in bekannter Weise mit flexiblen Antriebsgliedern 11 in Eingriff steht. Die flexiblen Antriebsglieder 11 sind an ihren dem elektrischen Antrieb abgewandten Enden mit dem Auszugsprofil 5 bzw. Gleitelementen 12 des Auszugsprofils 5 verbunden.

Die Gleitelemente 12 können hierbei direkt mit den flexiblen Antriebsgliedern 11 verbunden, beispielsweise an diese angespritzt sein, oder aber auch durch ein entsprechendes Verbindungselement mit diesen verbunden sein. Die flexiblen Antriebsglieder 11 sind in bekannter Weise in Führungsrohren 20 bzw. in den Führungsschienen 6 ausknicksicher geführt.

Figur 2 zeigt eine Heckansicht eines Fahrzeugs mit einem erfindungsgemäßen Fensterrollo 1. Unterhalb einer Hutablage 16 ist - hier nicht sichtbar - eine Wickelwelle 3 drehbar gelagert. Auf die Wickelwelle 3 ist in bekannter Weise die Rollobahn 2 aufgewickelt, welche an ihrem der Wickelwelle 3 abgewandten Ende mit einem Auszugsprofil 5 verbunden ist. In nicht ausgezogenem Zustand taucht das Auszugsprofil 5 teilweise in eine entsprechende Ausnehmung der Hutablage 16 ein, so dass dieses optisch nicht störend in Erscheinung tritt. Im Bereich der Innenverkleidung 8 ist eine Führungsschiene 6 angeordnet, in welcher die Enden des Auszugsprofils 5 verschieblich gelagert sind und hierdurch ein Ausziehen der Rollobahn 2 ermöglichen. Bedingt durch die Karosserieform sowie die Wölbung der Fensterscheibe muss die Wickelwelle 3 in einem gewissen Abstand zur Fensterscheibe gelagert sein. Die Führungsschienen 6 verlaufen daher in ihrem unteren Bereich radiusförmig auf die Wickelwelle zu, so dass eine saubere Führung der Rollobahn möglich ist.

Im Stand der Technik bilden die Führungsschienen 6 hinterschnittene Nutprofile, in welchem die Gleitelemente 12 sowie die flexiblen Antriebsglieder 11 geführt sind. Um ein optisch ansprechendes Erscheinungsbild zu bieten, waren die Führungsschienen 6 im Stand der Technik weitgehend hinter der Verkleidung 8 der C-Säule angeordnet und durch diese weitgehend verdeckt.
Bedingt durch die hinterschnittene Nut und den Verlauf der Schienen waren häufig mehrteilige Schienen und mehrteilige Verkleidungsteile für die C-Säule erforderlich, welche erheblich von den Verkleidungsteilen für Fahrzeuge ohne Fensterrollo 1 abwichen.

Gemäß der vorliegenden Erfindung sind die Führungsschienen 6 sichtbar an dem Innenverkleidungsteil 8 angeordnet, wobei die Sichtseite der Schiene 6 nicht durch eine Führungsnut beeinträchtigt ist. Die Führungsschiene 6 ist in einer entsprechenden Ausnehmung des Innenverkleidungsteils 8 angeordnet und verblendet zugleich die Ausnehmung.

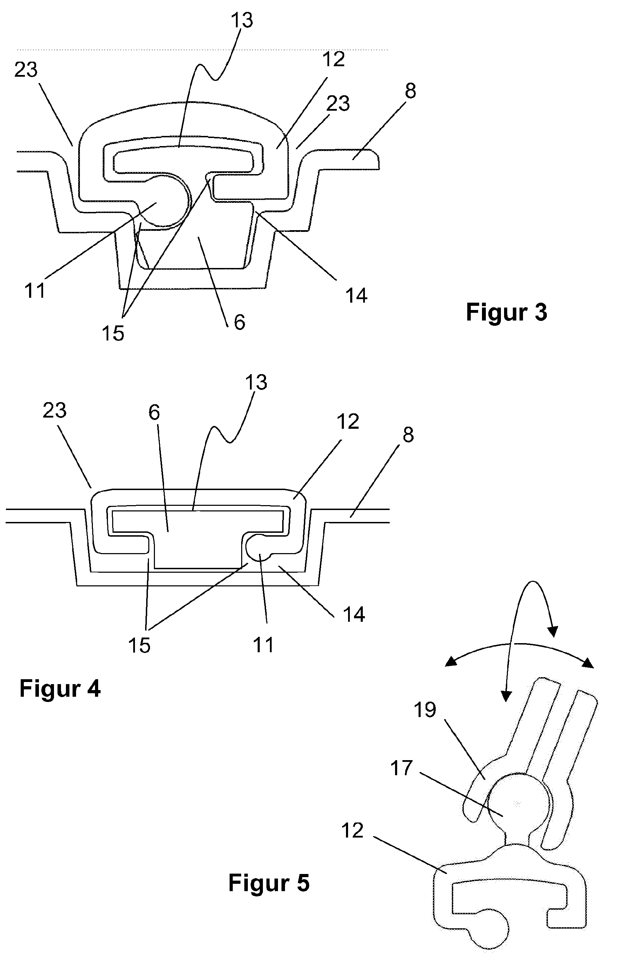

Figur 3 zeigt eine schematische Schnittdarstellung durch eine erfindungsgemäße Führungsschiene 6 mit einem Gleitelement 12, welche in einer Nut 14 eines Innenverkleidungsteiles 8 angeordnet ist. Die erfindungsgemäße Schiene 6 weist eine geschlossene Oberfläche 13 auf, so dass die Schiene 6 eine optisch ansprechende Oberfläche bildet und nicht hinter einer Innenverkleidung 8 verborgen werden muss. Hierdurch ist es möglich, die Schiene 6 direkt und sichtbar auf einer Innenverkleidung 8, insbesondere einer Verkleidung der C-Säule, anzubringen. Die erfindungsgemäße Schiene 6 kann daher zu 100% als Serienteil für Varianten sowohl mit als auch ohne Fensterrollo 1 verbaut werden. Die geschlossene Oberfläche 13 der Schiene 6 ermöglicht verschiedene optisch ansprechende Gestaltungen, so dass die Führungsschiene 6 in Fahrzeugen ohne Fensterrollo 1 als Designelement oder auch Beleuchtungselement, wie später noch näher ausgeführt, dienen kann.

Da die erfindungsgemäße Führungsschiene 6 im Sichtbereich des Innenraumes angeordnet werden kann, sind aufwendige Gestaltungen der Innenverkleidungsteile 8 nicht erforderlich. Die Führungsschiene 6 kann in einer entsprechend geformten Nut 14 des Innenverkleidungsteiles 8 angeordnet sein. Mehrteilige sowie von der Serienausstattung abweichende Ausführungen der Innenverkleidung 8 für Fahrzeuge mit Fensterrollo können hierdurch vermieden werden.

In einem seitlichen der Sichtseite abgewandten Bereich weist die erfindungsgemäße Führungsschiene 6 jeweils zwei einander gegenüberliegende Ausnehmungen 15 auf, in welchen das Auszugsprofil 5 bzw. ein Gleitelement 12 des Auszugsprofils 5 sowie im Falle einer elektrischen Antriebseinrichtung die flexiblen Antriebsglieder 11 geführt werden können. Das Gleitelement 12 des Auszugsprofils 5 umgreift hierbei die Führungsschiene 6 von außen, so dass das Auszugsprofil 5 sicher geführt ist. Gemäß der vorliegenden Darstellung sind die Ausnehmungen 15 der Führungsschiene 6 als Nuten ausgebildet. Ebenso ist es jedoch auch möglich, dass die Ausnehmungen 15 durch einen einfachen Absatz ausgebildet werden, wie in Figur 4 dargestellt. Die Führungsschiene 6 weist in diesem Fall einen weitgehend T-förmigen Querschnitt auf.

Um die flexiblen Antriebsglieder 11 ausknicksicher führen zu können, bildet zumindest eine der Ausnehmungen 15 der Führungsschiene 6 zusammen mit einer oder mehreren Wänden der Nut bzw. Ausnehmung 14 des Innenverkleidungsteiles 8 eine hinterschnittene Nut. Die flexiblen Antriebsglieder 11 können hierdurch sicher geführt werden, wobei die Führungsschienen 6 dennoch auf einfache Weise ohne Kerne als Spritzgussteile hergestellt werden können. Gemäß der Darstellungen der Figuren 3 und 4 sind die flexiblen Antriebsglieder 11 direkt an die Gleitelemente 12 angeformt, sie können jedoch auch mittels eines Verbindungselementes an diesen befestigt sein.

Die Führungsschiene 6 ist in montiertem Zustand flächenbündig mit dem Innenverkleidungsteil 8 angeordnet, so dass diese nicht störend in Erscheinung tritt. Die Führungsschiene 6 ist fest mit dem Innenausstattungsteil 8 verbunden, beispielsweise durch Kleben oder durch geeignete Befestigungselemente wie Schrauben oder Nieten. Ebenso kann die Führungsschiene auch eingeclipst sein.

Wie insbesondere in Figur 1 ersichtlich, weist das Heckfenster eine weitgehend trapezförmige Form auf. Das Auszugsprofil 5 weist daher eine Einrichtung zum Breitenausgleich 18 auf, welche beispielsweise durch ein teleskopartig in dem Auszugsprofil 5 gelagertes Bauteil gebildet werden kann. Um eine klemmfreie Führung des Auszugsprofils an den Führungsschienen, insbesondere im Bereich des Radius 21 (Figur 2), zu gewährleisten, ist es vorteilhaft, wenn das Auszugsprofil 5 bzw. die Einrichtung zum Breitenausgleich 18 mit den Gleitelementen 12 durch ein Gelenk verbunden ist.

Eine derartige gelenkige Verbindung eines Gleitelementes 12 mit dem Auszugsprofil 5 bzw. dem Element zum Breitenausgleich 18 ist in Figur 5 gezeigt. Vorteilhaft ist es, wenn das Gelenk als Kugelgelenk 17 ausgebildet ist, wobei die Kugel an dem Gleitelement 12 angeordnet sein kann. An dem Auszugsprofil 5 bzw. dem Element zum Breitenausgleich 18 ist hierbei ein Führungstopf 19 angeordnet, welcher die Beweglichkeit des Gelenks auf zwei Richtungen begrenzt. Der Führungstopf 19 verhindert hierbei eine Drehung des Auszugsprofils 5 um seine Längsachse, da dies bei einem gebogenen Auszugsprofil 5 zu einem Verlust der Spannung der Rollobahn 2 führen würde. In den anderen Richtungen (s. Pfeile) ermöglicht das Gelenk eine Drehung des Auszugsprofils 5 in Bezug auf die Gleitelemente 12, so dass Form- und Lageabweichungen der Schienen 6 ausgeglichen werden können. Anstelle des Kugelgelenkes 17 kann jedoch auch ein Scharnier zwischen dem Gleitelement 12 und dem Auszugsprofil 5 bzw. der Einrichtung zum Breitenausgleich 18 angeordnet sein, welches die entsprechenden Drehbewegungen ermöglicht.

Um die Führungsschiene 6 optisch ansprechend zu gestalten, kann diese mit einer dekorativen Beschichtung, beispielsweise einer Lackierung, versehen sein, welche auf den Fahrzeuginnenraum abgestimmt ist. Die Führungsschiene 6 kann jedoch auch aus einem transparenten Material, beispielsweise als Kunststoffspritzgussteil, ausgeführt sein und mit einer hier nicht dargestellten Einrichtung zur Beleuchtung kombiniert sein. Die Einrichtung zur Beleuchtung kann hierbei durch die Führungsschiene 6 verdeckt sein, so dass lediglich eine beleuchtete Fuge 23 zwischen Führungsschiene 6 und Innenverkleidungsteil 8 entsteht.

Die Einrichtung zur Beleuchtung kann eine herkömmliche Lichtquelle oder auch farbige Elektrolumineszenzkabel umfassen, so dass eine Vielzahl verschiedener Effekte möglich ist. Ebenso kann die Führungsschiene 6 aus einem transparenten Material ausgebildet sein und nur teilweise mit einer Beschichtung, beispielsweise eine Lackierung, versehen sein. Auch hier sind insbesondere in Kombination mit einer Einrichtung zur Beleuchtung verschiedenste optische Effekte möglich. So können mittels einer teilweisen Beschichtung verschiedenste Muster oder auch Schriftzüge auf die Führungsschiene 6 aufgebracht werden.

Durch die erfindungsgemäße Ausgestaltung der Führungsschiene ist es möglich, diese als Serienteil für sämtliche Fahrzeugvarianten mit und ohne Fensterrollo einzusetzen. Gemäß der vorstehenden Ausführungsbeispiele wurde das Fensterrollo insbesondere als Heckfensterrollo beschrieben. Das erfindungsgemäße Fensterrollo mit der Führungsschiene ist jedoch auch vor anderen Fenstern einsetzbar. Das erfindungsgemäße Fensterrollo kann beispielsweise auch als Dachrollo vor einem Glasdach oder auch vor einem Seitenfenster angeordnet sein. Weitere Abwandlungen und Kombinationen im Rahmen der Patentansprüche fallen ebenfalls unter die Erfindung.

## Patentansprüche

1. Fensterrollo (1), insbesondere Heckfensterrollo, für Kraftfahrzeuge mit einer Rollobahn (2), die mit ihrem ersten Ende mit einer drehbar gelagerten Wickelwelle (3) und mit ihrem zweiten Ende mit einem Auszugsprofil (5) verbunden ist, mit einer Antriebseinrichtung (9) zum Aufwickeln und/oder Abwickeln der Rollobahn (2) auf die Wickelwelle (3) sowie mit zwei seitlich an dem Fenster angeordneten Führungsschienen (6), in denen die Enden des Auszugsprofils (5) verschiebbar geführt sind, **dadurch gekennzeichnet, dass** die Führungsschienen (6) in einer Nut (14) eines Innenverkleidungsteiles (8) des Kraftfahrzeuges angeordnet sind, wobei jede Führungsschiene (6) eine Sichtseite (13) mit einer geschlossenen Oberfläche (13) aufweist und in einem seitlichen, der Sichtseite abgewandten Bereich jeweils zwei einander gegenüberliegende Ausnehmungen (15) zur Führung des Auszugsprofils (5) und/ oder von Teilen der Antriebseinrichtung (9).

2. Fensterrollo nach dem vorhergehenden Anspruch, **dadurch gekennzeichnet, dass** die Ausnehmungen (15) der Führungsschienen (6) als Nuten, insbesondere als hinterschneidungsfreie Nuten, ausgebildet sind.

3. Fensterrollo nach einem der vorhergehenden Ansprüche, **dadurch gekennzeichnet, dass** in montiertem Zustand eine Ausnehmung (15) der Führungsschiene (6) mit der Nut (14) des Innenverkleidungsteils (8) eine hinterschnittene Führungsnut ausbildet.

4. Fensterrollo nach einem der vorhergehenden Ansprüche, **dadurch gekennzeichnet, dass** in montiertem Zustand die Führungsschiene (6) flächenbündig mit dem Innenverkleidungsteil (8) angeordnet ist.

5. Fensterrollo nach einem der vorhergehenden Ansprüche, **dadurch gekennzeichnet, dass** die Antriebseinrichtung (9) einen elektrischen Antrieb umfasst, welcher über verschieblich geführte, flexible Antriebsglieder (11) mit dem Auszugsprofil (5) verbunden ist.

6. Fensterrollo nach einem der vorhergehenden Ansprüche, **dadurch gekennzeichnet, dass** die flexiblen Antriebsglieder (11) in einer hinterschnittenen Führungsnut geführt sind.

7. Fensterrollo nach einem der vorhergehenden Ansprüche, **dadurch gekennzeichnet, dass** das Auszugsprofil (5) einen einer Querwölbung des Fensters angepassten bogenförmigen Verlauf aufweist.

8. Fensterrollo nach einem der vorhergehenden Ansprüche, **dadurch gekennzeichnet, dass** das Auszugsprofil (5) über Gleitelemente (12) in den Führungsschienen (6) geführt ist.

9. Fensterrollo nach einem der vorhergehenden Ansprüche, **dadurch gekennzeichnet, dass** das Auszugsprofil (5) mit den Gleitelementen (12) durch ein Gelenk verbunden ist.

10. Fensterrollo nach einem der vorhergehenden Ansprüche, **dadurch gekennzeichnet, dass** das Gelenk als Kugelgelenk (17) ausgebildet ist.

11. Fensterrollo nach einem der vorhergehenden Ansprüche, **dadurch gekennzeichnet, dass** das Auszugsprofil (5) eine Einrichtung zum Breitenausgleich (18) aufweist.

12. Fensterrollo nach einem der vorhergehenden Ansprüche, **dadurch gekennzeichnet, dass** die Führungsschienen (6) mit einer Einrichtung zur Beleuchtung versehen sind.

13. Fensterrollo nach einem der vorhergehenden Ansprüche, **dadurch gekennzeichnet, dass** die Führungsschienen (6) mit einer dekorativen Oberfläche versehen sind.

14. Führungsschiene (6) für ein Fensterrollo (1), insbesondere Heckfensterrollo, eines Kraftfahrzeuges zur Führung der Enden eines Auszugsprofils (5) des Fensterrollos (1), **dadurch gekennzeichnet, dass** die Führungsschiene (6) eine Sichtseite (13) mit einer geschlossenen Oberfläche aufweist und in einem seitlichen, der Sichtseite (13) abgewandten Bereich zwei einander gegenüberliegende Ausnehmungen (15) zur Führung des Auszugsprofils (5) und/ oder von Teilen der Antriebseinrichtung (9).

15. Führungsschiene nach dem vorhergehenden Anspruch, **dadurch gekennzeichnet, dass** die Ausnehmungen (15) der Führungsschiene (6) als Nuten, insbesondere als hinterschneidungsfreie Nuten, ausgebildet sind.

16. Führungsschiene nach dem vorhergehenden Anspruch, **dadurch gekennzeichnet, dass** die Führungsschiene (6) als Kunststoffspritzgussteil ausgeführt ist.

17. Führungsschiene nach dem vorhergehenden Anspruch, **dadurch gekennzeichnet, dass** die Führungsschiene (6) aus einem transparenten Material ausgebildet ist.

18. Führungsschiene nach dem vorhergehenden Anspruch, **dadurch gekennzeichnet, dass** die Führungsschiene (6) mit einer Einrichtung zur Beleuchtung versehen ist.

19. Führungsschiene nach dem vorhergehenden Anspruch, **dadurch gekennzeichnet, dass** die Führungsschiene (6) mit einer dekorativen Beschichtung, insbesondere Lackierung, versehen ist.

20. Führungsschiene nach dem vorhergehenden Anspruch, **dadurch gekennzeichnet, dass** die Führungsschiene (6) aus einem transparenten Material ausgebildet ist und nur teilweise mit einer Beschichtung, insbesondere Lackierung, versehen ist.
